# EUROPÄISCHE PATENTSCHRIFT

(11) **EP 1 245 271 B1**
(45) Veröffentlichungstag und Bekanntmachung des Hinweises auf die Patenterteilung: **21.11.2007**
(21) Anmeldenummer: 02003094.6
(22) Anmeldetag: 13.02.2002
(51) Int. Cl.: B01J 8/00, B01J 19/00, C07F 7/02

(54) **Vorrichtung und Verfahren zur Herstellung von im Wesentlichen halogenfreien Trialkoxysilanen**
Apparatus and process for preparing practically chlorine-free trialkoxysilanes
Appareil et procédé pour préparer trialkoxysilanes practiquement exempts de chlore

(30) Priorität: 30.03.2001 DE 10116007
(43) Veröffentlichungstag der Anmeldung: 02.10.2002
(73) Patentinhaber: Evonik Degussa GmbH, 40474 Düsseldorf (DE)
(72) Erfinder: Steding, Frank, Dr., 45768 Marl (DE); Grund, Gerda, Dr., 48249 Dülmen (DE); Standke, Burkhard, Dr., 79540 Lörrach (DE); Kropfgans, Frank, Dr., 79618 Rheinfelden (DE); Horn, Michael, Dr., 79618 Rheinfelden (DE); Frings, Albert-Johannes, Dr., 79618 Rheinfelden (DE); Monkiewicz, Jaroslaw, Dr., 79618 Rheinfelden (DE); Srebny, Hans-Günther, Dr., 31582 Nienburg (DE); Seiler, Claus-Dietrich, 79618 Rheinfelden (DE); Kötzsch, Hans-Joachim, Dr., 79618 Rheinfelden (DE)

(56) Entgegenhaltungen:
- DE-A- 10 033 964
- US-A- 5 084 590
- DATABASE CA [Online] CHEMICAL ABSTRACTS SERVICE, COLUMBUS, OHIO, US; ONO, TAKASHI ET AL: "High-purity alkoxysilanes and production methods therefor" retrieved from STN Database accession no. 131:258053 CA XP002248857 & JP 11 269181 A (MITSUI CHEMICALS INC., JAPAN) 5. Oktober 1999 (1999-10-05)

## Beschreibung

Die Erfindung betrifft ein Verfahren sowie eine Vorrichtung zur Herstellung von Trialkoxysilanen der allgemeinen Formel I

(RO)₃SiH (I),

worin R eine Alkylgruppe mit 1 bis 6 Kohlenstoffatomen bedeutet,
durch Umsetzung von Silicium mit Alkoholen in einem inerten Lösemittel in Gegenwart eines kupferhaltigen Katalysators.

Es ist bekannt, dass monomere Hydrogenalkoxysilane, wie Trimethoxysilan oder Triethoxysilan, eine Gruppe wichtiger Schlüsselverbindungen in der organischen Siliciumchemie darstellen.

Über die Si-H-Funktion sind mittels Hydrosilylierung diverse funktionelle Organosilanverbindungen zugänglich - beispielsweise Alkyl-, Aminoalkyl-, Halogenalkyl-, Vinyl-, Epoxyalkylalkoxysilane. Diese Verbindungen besitzen ein sehr umfangreiches Anwendungsfeld.

Über basisch katalysierte Dismutierung von Hydrogenalkoxysilanen können die Monosilane in hoher Reinheit gewonnen werden. Diese finden beispielsweise im Bereich der Halbleiterindustrie Verwendung.

Hydrogenalkoxysilane, wie Triethoxysilan (TEOS) oder Trimethoxysilan (TMOS), werden im technischen Maßstab heutzutage über Veresterung von Trichlorsilan mit Ethanol oder Methanol hergestellt. Trichlorsilan erhält man in technischer Größenordnung durch Umsetzung von Elementarsilicium mit Chlorwasserstoff. Das technisch genutzte Verfahren zur Herstellung von TMOS und TEOS umfasst zwei Prozessstufen, die Trichlorsilansynthese und die nachfolgende Veresterung. Beide Stufen erfordern aufgrund der bekannt hohen chemischen Aggressivität von Chlorwasserstoff ein hohes Anlageninvestment und hohe Folgekosten für die Instandhaltung einer solchen Anlage. Zudem liefert die Trichlorsilansynthese mit viel Aufwand zu entsorgende, selbstentzündliche, chlorhaltige Rückstände. Nach diesem Verfahren hergestelltes TEOS oder TMOS weist einen deutlichen Chlorgehalt auf. Der Chloranteil in diesen Produkten ist nur über sehr aufwendige Destillationsverfahren in den ppm-Bereich absenkbar.

Viele Anwendungsbereiche erfordern zunehmend den Einsatz chlorfreier Organosilane. Solche sind nach den gängigen Herstellverfahren nicht zugänglich.

Ein Ansatz zur Lösung dieses Problems könnte in der kupferkatalysierten, direkten Umsetzung von Elementarsilicium mit Alkoholen, wie Methanol oder Ethanol, zu TMOS oder TEOS liegen. Die meisten der beschriebenen Verfahren besitzen jedoch wenig technische Relevanz, obwohl die ersten entsprechenden Patentanmeldungen schon auf das Jahr 1949 zurückgehen (US 2 473 260). Nachteilig ist insbesondere die sehr geringe Reaktivität der verwendeten Siliciumqualitäten gegenüber Methanol oder Ethanol bei chlorfreier Herstellweise, sodass nur sehr geringe Ausbeuten, bezogen auf das eingesetzte Silicium, erhalten werden. Zudem ist die Herstellung der Cu/Si-Kontaktmasse recht aufwendig, die beispielsweise gemäß der Lehre der US 3 641 077 durch Sintern von Kupfer und Silicium bei 1 050 °C und anschließende Feinstmahlung zugänglich ist. Nach 4 bis 5 Stunden Reaktionsdauer und 280 °C Reaktionstemperatur setzen sich unter Verwendung von Methanol nur ca. 8 % des eingesetzten Siliciums zu Organosilanen um - ca. 5 % zu TMOS und ca. 3 % zu Tetramethoxysilan. Aufgrund der geringeren Reaktivität von Ethanol setzen sich unter ansonsten gleichen Reaktionsbedingungen nur 6 % des eingesetzten Siliciums zu Organosilanen um - ca. 5 % TEOS und ca. 1 % Tetraethoxysilan. Propanol und Butanol sind chemisch noch weniger reaktiv; die Silicium-Umsätze liegen bei 1,5 % und 0,7 %.

Über die direkte Dimethyldichlorsilansynthese durch eine kupferkatalysierte Umsetzung von Silicium mit Methylchlorid ist bekannt, dass Organosilane durch die direkte Synthese in hohen Ausbeuten durch Verwendung chlorhaltiger Agentien zugänglich sind. Offenbar trifft dies auch für die direkte TEOS- und TMOS-Synthese zu. Technisch interessante TEOS-Ausbeuten von mehr als 70 %, bei einer Selektivität von mehr als 90 %, werden in der DE-PS 22 47 872 beschrieben. Als Katalysator dient hier CuCI. Eine zusätzliche Aktivierung wurde durch Verwendung von Ethanol, mit einem Zusatz von 0,17 % HF, erreicht. Ein chlorfreies Produkt wird allerdings aufgrund der Verwendung von CuCI als Katalysator nicht erhalten. Zudem bereitet der dem Ethanol beigemischte Fluorwasserstoff Korrosionsprobleme und findet sich in Spuren auch im Produkt wieder.

Über Maßnahmen zur weiteren Umsatzsteigerung wird in der Europäischen Patentschrift Nr. 0 280 517 berichtet. Die Voraktivierung des verwendeten Siliciumpulvers erfolgt hier mit Methylchlorid. Als Katalysator dient abermals CuCI. Die TMOS-Umsatzraten werden mit 81 % bezüglich des eingesetzten Siliciums und die Selektivität mit 88 % angegeben. Bei der TEOS-Synthese ist die Reaktivität deutlich geringer: 60,2 % Silicium-Umsatz bei 78,4 % Selektivität. Das Verfahren arbeitet ebenfalls nicht chlorfrei, und die Ausbeuten sind für eine technische Anwendung wenig attraktiv.

US- PS 5084590 offenbart ein Vorrichtung zur Herstellung von Trialkoxysilanen.

In der US-PS 4 727 173 wird die chlorfreie Herstellung von Trimethoxysilan mit Ausbeuten > 80 % (bezogen auf das eingesetzte Silicium) durch Umsetzung von Methanol mit handelsüblichem Silicium-Pulver - Reinheit: 98,5 Gew.-%, Fe < 0,5 Gew.-% ohne weitere Aktivierungsschritte - unter Einfluss von Kupfer(II)hydroxid als Katalysator beschrieben. Nachgestellte Versuche mit handelsüblichem, feinstgemahlenem Silicium-Pulver und Cu(OH)₂ als Katalysator führten bei der TMOS-Synthese nur zu unbefriedigenden Ausbeuten von ca. 30 %. Zudem wurde im Vergleich zur CuCl-katalysierten Reaktion ein erhöhter Anteil an Siloxanen festgestellt. - Eine Folge der thermischen Zersetzung von Cu(OH)₂ zu CuO und Wasser, das seinerseits die vorliegenden Trialkoxysilane unter Alkanolabspaltung sowie unter Bildung von Siloxanen hydrolysiert. Ferner ist eine chlorfreie TEOS-Herstellung mit handelsüblichem Cu(OH)₂ als Katalysator in der Regel nicht möglich.

Der Erfindung liegt daher die Aufgabe zugrunde, ein wirtschaftliches Verfahren zur Herstellung von im Wesentlichen chlorfreien Trialkoxysilanen zu entwickeln.

Die gestellte Aufgabe wird erfindungsgemäß entsprechend den Angaben der Patentansprüche gelöst.

Überraschenderweise wurde gefunden, dass die Umsetzung von Silicium mit Ethanol in einem inerten Lösemittel am besten in Gegenwart von kupferorganischen Verbindungen als Katalysator durchgeführt wird, dabei werden besonders hohe Ausbeuten und sehr gute Selektivitäten erzielt. Geeigneterweise wird pulverförmiges, voraktiviertes sowie eisenarmes Silicium eingesetzt. Als Katalysator werden Kupfersalze von Neocarbonsäuren besonders bevorzugt verwendet. Ferner wurde gefunden, dass man das vorliegende Verfahren in besonders wirtschaftlicher Weise als kontinuierliches Verfahren betreiben kann.

Gegenstand der vorliegenden Erfindung ist daher ein Verfahren zur Herstellung von im Wesentlichen halogenfreiem, vorzugsweise im Wesentlichen chlorfreiem Triethoxysilan der Formel

(EtO)₃SiH

durch Umsetzung von Silicium mit Ethanol in einem inerten Lösemittel in Gegenwart eines kupferhaltigen Katalysators, wobei man als Katalysator mindestens eine kupferorganische Verbindung aus der Reihe Kupferalkylat oder Kupfercarboxylat, wobei der Carboxylrest 3 bis 9 Kohlenstoffatome enthält, einsetzt.

Unter "im Wesentlichen halogenfreien", "chlorfreien" bzw. "im Wesentlichen chlorfreien" Trialkoxysilanen versteht der Fachmann in der Regel solche Verbindungen, deren Halogen-, Halogenid-, Chlor- bzw. Chloridgehalt im Bereich der Nachweisgrenze der Halogene, insbesondere Chlor bzw. Chlorid, liegt, d. h. einen Wert von ≤ 5 Gew.-ppm aufweisen.

Das erfindungsgemäße Verfahren zur Herstellung von Triethoxysilan ist im Allgemeinen ein Prozess, an dem unter den vorherrschenden Reaktionsbedingungen sowohl gasförmige, feste wie auch flüssige Komponenten beteiligt sind.

Als inertes Lösemittel wird geeigneterweise ein auf Kohlenwasserstoffen basierendes Wärmeträgeröl, vorzugsweise ein Tritoluol-lsomerengemisch, besonders vorzugsweise MARLOTHERM^{®} S, eingesetzt. Das inerte Lösemittel dient beim erfindungsgemäßen Verfahren in der Regel als Reaktionsmedium, wobei das eingesetzte Silicium darin suspendiert werden kann.

Beim erfindungsgemäßen Verfahren werden als Katalysator Kupfer-Verbindungen verwendet, welche vorzugsweise in dem inerten Lösemittel oder in dem verwendeten Alkohol löslich sind. Als Alkohol wird Ethanol eingesetzt. Gegenüber heterogen-katalytisch durchgeführten Reaktionen bieten solche Umsetzungen, in denen der Katalysator vorzugsweise im Reaktionsmedium in gelöster, d. h. im Allgemeinen in homogen verteilter Form zugegen ist, deutliche Vorteile. Im Wesentlichen chlorfreie Kupfer-Verbindungen, die in einem Reaktionsmedium löslich sind, könnten so ein besonders günstiges Reaktionsverhalten bewirken.

Als Katalysator werden beim erfindungsgemäße Verfahren Kupferalkylate oder Kupfercarboxylate verwendet die 3 bis 9 Kohlenstoffatome enthalten, besonders bevorzugt werden solche mit 7 bis 9 Kohlenstoffatomen. Insbesondere werden für die Herstellung der Kupfercarboxylate Neocarbonsäuren eingesetzt.

Die ais bevorzugter Katalysator im erfindungsgemäßen Verfahren verwendeten Kupfercarboxylate werden beispielsweise aus Kupferhydroxid und/oder Kupferoxid, welche aus einem im Wesentlichen chlorfreien Herstellverfahren stammen, und einer Carbonsäure unter Entfernen des Reaktionswassers hergestellt. Hierfür wird Kupferhydroxid und/oder Kupferoxid vorzugsweise mit einer überstöchiometrischen Menge an Carbonsäure, beispielsweise im molaren Verhältnis 1 : 2, eingesetzt, und nicht abreagierte Carbonsäure kann zusammen mit dem Reaktionswasser destillativ entfernt werden. Beispielsweise kann die Reaktion in einem Rotationsverdampfer durchgeführt werden. Die Entfernung des Reaktionswassers wird vorzugsweise entweder durch eine Schleppdestillation oder durch eine Vakuumdestillation, geeigneterweise im Temperaturbereich zwischen 20 und 180 °C, vorzugsweise im Temperaturbereich zwischen 140 und 180°C, durchgeführt. Die maximale Temperatur wird durch die thermische Stabilität der Kupferalkoxylate oder Kupfercarboxylate begrenzt und sollte daher in der Regel ≤ 280 °C betragen. Der Einsatz von Stickstoff zur Inertisierung und Partialdruckabsenkung ist ebenfalls möglich.

Bevorzugt wird als Katalysator ein Kupfercarboxylat, z. B. auch in Ethanol gelöst - beispielsweise als 0,1 bis 20 Gew.-%ige Lösung, insbesondere als 2 bis 5 Gew.-%ige Lösung, beim erfindungsgemäßen Verfahren eingesetzt. So hergestelltes Kupfercarboxylat kann im Allgemeinen durch die folgende stöchiometrische Zusammensetzung beschrieben werden:
Cu(RCOO)ₓOH_{y} mit x = 1 oder 2 und y = 0 oder 1, x + y = 2, R = Alkyl-, Alkenyl-, Arylrest.

Die als bevorzugter Katalysator im erfindungsgemäßen Verfahren verwendeten Kupfercarboxylate können aber auch aus metallischem Kupfer und einer Carbonsäure hergestellt werden. Dabei kann mit einem Überschuss an freier Carbonsäure gearbeitet werden. Diese Umsetzung führt man vorzugsweise bei einer Temperatur zwischen 140 und 180 °C durch. Als Kupfer-Quelle kann aber auch der Si- und Cu-haltige Abbrand aus der Herstellung der Trialkoxysilane der allgemeinen Formel I verwendet werden. Nach erfolgter Reaktion des Kupfers mit der Carbonsäure werden im Allgemeinen unlösliche Bestandteile abfiltriert und das Filtrat, wie bereits oben beschrieben, destillativ von überschüssiger Säure befreit.

Bevorzugt wird beim erfindungsgemäßen Verfahren ein weitgehend von Oberflächensauerstoff und Siliciumoxid befreites, pulverförmiges Silicium, besonders vorzugsweise mit einer Korngröße d₉₀ von 20 bis 1.000 µm und d₅₀ von 10 bis 800 µm, bevorzugt d₅₀ von 20 bis 500 µm, besonders bevorzugt d₅₀ von 30 bis 200 µm, ganz besonders bevorzugt d₅₀ von 10 bis 100 µm, eingesetzt. Die Bestimmung der Korngrößenverteilung (d-Werte) erfolgte mittels Laserbeugung (Gerätetyp: Microtrac - "full range analyser", Fa. Leeds and Northrup).

Vorzugsweise enthält das hier eingesetzte Silicium weniger als 0,1 Gew.-% Eisen. Beispielsweise sind bei der Synthese von TEOS nach dem erfindungsgemäßen Verfahren Ausbeuten von mehr als 80 %, bezogen auf das eingesetzte Silicium, möglich, wobei der Fe-Gehalt des eingesetzten Siliciums vorzugsweise 0,03 Gew.-% nicht überschreitet. Vergleichsweise beträgt die TEOS-Ausbeute rund 50 %, so weit der Fe-Gehalt des Siliciums im Bereich von 0,4 Gew.-% liegt. Während der Synthese von Trialkoxysilanen der allgemeinen Formel I sollte weitgehend eisenfrei gearbeitet sowie der Kontakt der Reaktionsmischung mit Eisen vermieden werden. Beispielsweise können Glas-Reaktoren, emaillierte Reaktoren, Kupfer-Reaktoren, verkupferte Reaktoren sowie Arbeitsgeräte und Apparate mit vergleichbarer Beschaffenheit und vergleichbaren Oberflächeneigenschaften für das erfindungsgemäße Verfahren verwendet werden.

Das für die Umsetzung beim erfindungsgemäßen Verfahren verwendete Silicium kann durch eine Behandlung mit Fluorwasserstoff, wobei die eingesetzte Lösung vorzugsweise 0,1 bis 40 Gew.-% HF, besonders vorzugsweise 0,5 bis 5 Gew.-% HF, enthält, gewonnen werden. Die Behandlung des verwendeten Siliciums erfolgt geeigneterweise in einem wässrigen und/oder alkoholischen Medium, bevorzugt bei einer Temperatur zwischen 0 und 100 °C, bevorzugt zwischen 0 und 50 °C, besonders bevorzugt zwischen 10 und 40 °C und ganz besonders bevorzugt zwischen 20 und 30 °C.

Das für die Umsetzung verwendete Silicium kann aber auch in einem wässrigen und/oder alkoholischen Medium mit einem pH-Wert > 10 vorbehandelt werden. Als basisches Medium wird vorzugsweise Natronlauge, besonders vorzugsweise mit einem Gehalt zwischen 0,1 und 50 Gew.-% NaOH, ganz besonders vorzugsweise mit einem Gehalt zwischen 0,1 und 10 Gew.-% NaOH, eingesetzt.

Die Aktivierung des Siliciumpulvers erfolgt geeigneterweise in einer Rührapparatur mit Inertgasüberlagerung, z. B. Stickstoff. Die Behandlungszeit zur Aktivierung des Siliciums beträgt in der Regel mindestens eine Minute, vorzugsweise 5 Minuten bis 1 Stunde, besonders vorzugsweise 15 bis 30 Minuten. Bei Verwendung einer NaOHhaltigen Lösung, insbesondere solche mit einer Konzentration oberhalb 1 Gew.-% NaOH, sollte eine Behandlungszeit des Siliciums eine viertel Stunde nicht überschreiten.

So behandeltes Silicium kann von der wässrigen und/oder alkoholischen Phase unter sauerstoffarmen Bedingungen, beispielsweise durch Filtration, getrennt, mit Wasser, vorzugsweise sauerstoffarmes Wasser, und/oder Alkoholen, vorzugsweise Methanol oder Ethanol, gewaschen und nachfolgend ebenfalls unter sauerstoffarmen Bedingungen gehandhabt werden. Beispielsweise liegen die Rest-Fluor-Gehalte von so aktiviertem Silicium bei rund 50 Gew.-ppm bis hin zur Nachweisgrenze des Fluors. Nach der Wäsche kann das behandelte Silicium aber auch getrocknet werden, vorzugsweise unter Vakuum, besonders vorzugsweise unter Vakuum bei einer Temperatur zwischen 0 und 180 °C, beispielsweise in einem Rotationsverdampfer. Die Trocknung des aktivierten Siliciums kann aber auch in anderen technischen Trocknungsapparaturen, z. B. einem Schaufeltrockner, vorzugsweise unter inertisierten Bedingungen, erfolgen. Nach der Trocknung ist das Siliciumpulver im Allgemeinen einsatzfähig. Die Lagerfähigkeit und die Handhabung des extrem sauerstoffempfindlichen Pulvers kann verbessert und erleichtert werden, wenn sofort nach der Behandlung oder nach der Trocknung das aktivierte Silicium beispielsweise in MARLOTHERM S^{®} suspendiert wird. Die Suspension kann direkt für das erfindungsgemäße Verfahren zur Herstellung von Triethoxysilan eingesetzt werden. Die Suspension ist in der Regel weit weniger sauerstoffempfindlich als das trockene aktivierte Pulver. Der Einsatz einer solchen Suspension führt im Allgemeinen selbst nach ca. 1 Stunde Luftkontakt zu keinen signifikanten Aktivitätseinbußen. Aktiviertes Silicium wird dennoch bis zur Umsetzung zu Triethoxysilan vorzugsweise unter einer sauerstoffarmen, inerten Flüssigkeit, besonders vorzugsweise unter dem für die Reaktion verwendeten inerten Reaktionsmedium, gehandhabt.

Die Umsetzung von Silicium mit Ethanol in einem inerten Lösemittel wird beim erfindungsgemäßen Verfahren in Gegenwart einer kupferorganischen Verbindung als Katalysator im Allgemeinen im Temperaturbereich zwischen 100 und 350 °C, bevorzugt im Temperaturbereich zwischen 180 und 260 °C, besonders bevorzugt im Temperaturbereich zwischen 200 und 250 °C, durchgeführt.

Ferner wird die Umsetzung von Silicium mit Ethanol beim erfindungsgemäßen Verfahren in einem inerten Lösemittel in Gegenwart einer kupferorganischen Verbindung als Katalysator, vorzugsweise bei Drücken von 1 bis 5 bar abs., besonders vorzugsweise bei Drücken zwischen 1 und 3 bar abs., durchgeführt.

Bei der Durchführung der Umsetzung von Silicium mit Ethanol in einem inerten Lösemittel in Gegenwart einer kupferorganischen Verbindung als Katalysator kann beim erfindungsgemäßen Verfahren der Katalysator auch während der Umsetzung nachdosiert werden. Dazu kann der Katalysator beispielsweise in dem bei der Umsetzung verwendeten Alkohol oder in dem als Reaktionsmedium verwendeten inerten Lösemittel gelöst und so nachdosiert werden.

Die erfindungsgemäße Umsetzung von Silicium mit Ethanol in einem inerten Lösemittel in Gegenwart einer kupferorganischen Verbindung als Katalysator wird geeigneterweise auch in Gegenwart eines Entschäumers, insbesondere in Gegenwart eines Methylsilikonöls, das vorzugsweise eine Viskosität zwischen 0,65 bis 1 000 000 mPa s besitzt, durchgeführt. Beispielsweise können hier Dimethylpolysiloxane mit einem Molgewicht zwischen 162 und 74 000 g/mol oder entsprechende Mischungen als Entschäumer verwendet werden.

Das erfindungsgemäße Verfahren zur Herstellung von Triethoxysilan, das die Umsetzung von Silicium mit Ethanol in einem inerten Lösemittel in Gegenwart einer kupferorganischen Verbindung als Katalysator beinhaltet, kann sowohl diskontinuierlich als auch kontinuierlich durchgeführt werden.

Daher ist auch Gegenstand der vorliegenden Erfindung eine Vorrichtung zur kontinuierlichen Herstellung von im Wesentlichen halogenfreien, vorzugsweise im Wesentlichen chlorfreien Trialkoxysilanen der allgemeinen Formel I

(RO)₃SiH (I),

worin R eine Alkylgruppe mit 1 bis 6 Kohlenstoffatomen bedeutet, bevorzugt werden lineare oder verzweigte Alkylgruppen,
auf der Basis einer Hauptreaktoreinheit (1), die einen Blasensäulenreaktor (1.1) mit mehrstufiger Rührvorrichtung (1.1.1) beinhaltet, mindestens einer dem Hauptreaktor vorgeschalteten Dosiereinheit (2, 3, 4) für Flüssigkeiten und/oder Suspensionen und mindestens einer Dosiereinheit (5) für gasförmige und/ oder dampfförmige Stoffe sowie einer dem Hauptreaktor nachgeschalteten Einheit (6) zur Produktaufarbeitung.

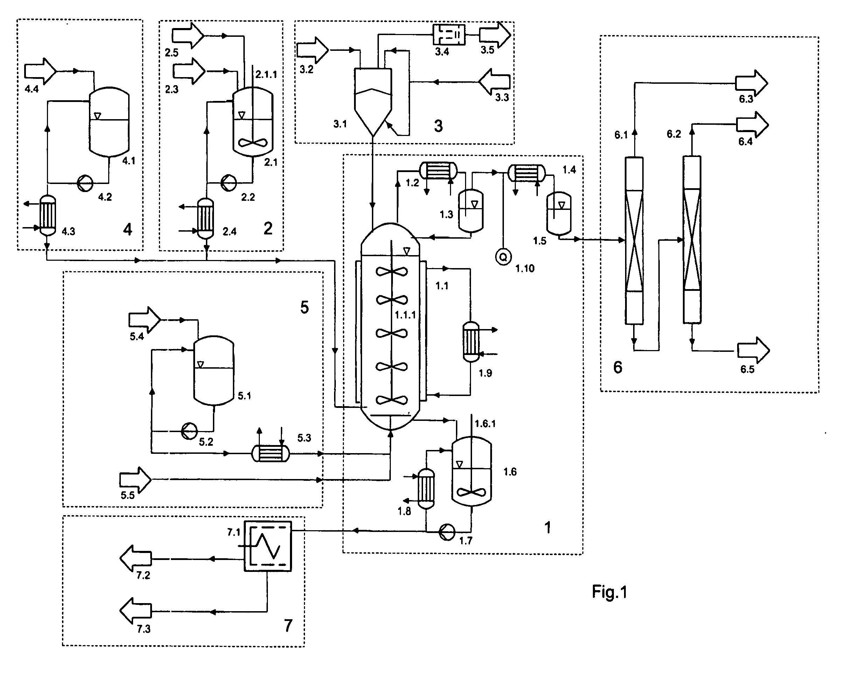

In der Figur 1 ist das Schema einer bevorzugten Ausführungsform der Vorrichtung zur kontinuierlichen Herstellung von im Wesentlichen halogenfreien, insbesondere chlorfreien, Trialkoxysilanen der allgemeinen Formel I dargestellt. Die Hauptreaktoreinheit (1) beinhaltet im Allgemeinen einen beheizbaren Blasensäulenreaktor (1.1), mit mehrstufiger Rührvorrichtung (1.1.1) und Mantelbeheizung über den Wärmetauscher (1.9). Am Kopf des Blasensäulenreaktors ist geeigneterweise ein Rücklaufkondensator (1.2) aufgesetzt, er dient der Trennung des Kopfprodukts von den Hochsiedern. Die Hochsieder, beispielsweise das inerte Lösemittel, laufen in der Regel als Flüssigphase über den Behälter 1.3 wieder in den Blasensäulenreaktor zurück. Das Kopfprodukt enthält im Allgemeinen das Trialkoxysilan und überschüssigen Alkohol und geringe Anteile des Lösungsmittels. Der Vorrichtung (1.2) kann eine weitere Kondensationsvorrichtung (1.4) und ein Auffangbehälter für Kopfprodukt (1.5) nachgeschaltet sein. Vom Boden des Blasensäulenreaktors (1.1) zweigt geeigneterweise ein Sumpfproduktbehälter (1.6) ab, von dem aus die weitere Aufarbeitung des Sumpfprodukts erfolgt, bevorzugt die Abtrennung des ausgetragenen Siliciums vom Lösungsmittel. Der Sumpfproduktbehälter (1.6) ist in der Regel mit Rührvorrichtung (1.6.1) ausgerüstet. Über eine Umwälzpumpe (1.7) und einen Wärmetauscher (1.8) kann das Sumpfprodukt über den Behälter (1.6) zirkuliert werden. Das Sumpfprodukt enthält im Allgemeinen in der Flüssigphase nur Lösungsmittel und als Feststoff nicht umgesetztes Silicium.

Über die Dosiereinheiten (2), (3), (4) und (5) können die für die Durchführung des erfindungsgemäßen Verfahrens notwendigen Edukte dem Blasensäulenreaktor zugeführt werden.

Geeigneterweise beinhaltet die Dosiereinheit (2) einen Vorlagebehälter (2.1) mit Stoffaufgabe (2.3), eine Rührvorrichtung (2.1.1), eine Inertgasbeaufschlagung (2.5), eine Umlaufpumpe (2.2) sowie die Möglichkeit, über einen Wärmetauscher (2.4) den Eduktstrom vorzuwärmen. Die Dosiereinheit (2) wird bevorzugt für die Dosierung und Zuführung der Katalysatorlösung in die Hauptreaktoreinheit (1) eingesetzt.

Die Dosiereinheit (4) beinhaltet vorzugsweise einen Vorlagebehälter (4.1) mit Stoffaufgabe (4.2), eine Umlaufpumpe (4.2) sowie die Möglichkeit, über einen Wärmetauscher (4.3) den Eduktstrom vorzuwärmen. Die Dosiereinheit (4) wird bevorzugt für die Dosierung und Zuführung des Lösemittels in die Hauptreaktoreinheit (1) eingesetzt.

Die Dosiereinheit (3) beinhaltet vorzugsweise einen Vorlagebehälter für Feststoff (3.1) mit geeigneter Stoffaufgabe (3.2), z. B. über pneumatische Förderung, eine Inertgasbeaufschlagung (3.3) und eine Filtervorrichtung (3.4) zur Feststoffabtrennung. Die Dosiereinheit (3) wird bevorzugt für die Dosierung und Zuführung von Silicium-Pulver in die Hauptreaktoreinheit (1) eingesetzt.

Die Dosiereinheit (5) beinhaltet vorzugsweise Vorrichtungen zur Dosierung von Gasen (5.5), beispielsweise für Stickstoff und gasförmige Edukte oder eine Vorrichtung zur Bevorratung (5.1) und nachfolgender Dosierung einer Flüssigkeit, wie Methanol oder Ethanol, die beispielsweise auch über einen Verdampfer (5.3), vorzugsweise in Form eines Wärmetauschers, in die Gas- bzw. Dampfphase überführt werden kann. Die Dosiereinheit (5) wird bevorzugt für die Dosierung und Zuführung von Alkoholen in die Hauptreaktoreinheit (1) eingesetzt.

Der Hauptreaktoreinheit (1) wird geeigneterweise eine Produktaufarbeitung (6) nachgeschaltet. Diese besteht im Allgemeinen aus thermischen Trennverfahren zur Trennung der Komponenten, z. B. einer Destillationskolonne (6.1) zur Abtrennung des nicht umgesetzten Alkohols vom Trialkoxysilan und der Destillationskolonne (6.2) zur Abtrennung von höhersiedenden Bestandteilen, im Wesentlichen dem Lösungsmittel. Bevorzugt wird die Aufarbeitung über Destillationskolonnen mit geringem hold-up durchgeführt. Die Verwendung und Kombination von Dünnschichtverdampfem, Fallfilmverdampfem und Destillationskolonnen zur schonenden Aufarbeitung mit kurzen Verweilzeiten ist ebenfalls möglich.

Nicht umgesetzter Alkohol, beispielsweise aus der Produktaufarbeitung (6), kann über die Dosiereinheit (5) dem Prozess wieder zugeführt werden.

Zur Prozesskontrolle wird beim erfindungsgemäßen Verfahren bevorzugt eine on-line-Wasserstoffanalytik (1.10), z.B. mittels on-line-Wärmeleitfähigkeitsdetektor (WLD) eingesetzt. Dieser wird bevorzugt an die Brüdenleitung des Blasensäulenreaktors angeschlossen, besonders bevorzugt vor dem Kondensator (1.4). Es ist jedoch ebenfalls möglich, die Wasserstoffanalytik in die Abgasleitung hinter der Produktaufbereitung (6) zu integrieren.

Aus dem Sumpfproduktbehälter (1.6) gelangt das Sumpfprodukt bevorzugt in eine Aufarbeitung zur Feststoffabtrennung, besonders bevorzugt eine Filterzentrifuge oder Dekanter. Das nicht umsetzte Silicium wird über die Ausschleusevorrichtung (7.2) ausgetragen und kann einer weiteren Aufarbeitung zugeführt werden. Das Lösungsmittel und höhersiedende, flüssige Bestandteile werden über die Ausschleusevorrichtung (7.3) ausgetragen und können teilweise über die Dosiervorrichtung (4) rezirkuliert werden.

Nicht umgesetzter Alkohol, beispielsweise aus der Produktaufarbeitung (6), kann über die Dosiereinheit (5) dem Prozess wieder zugeführt werden.

Die in dem Reaktionsmedium des erfindungsgemäßen Verfahrens löslichen kupferorganischen Verbindungen sind im Allgemeinen unter den oben genannten Reaktionsbedingungen über einen längeren Zeitraum nur bedingt stabil. Trotzdem bewirken die beim erfindungsgemäßen Verfahren eingesetzten kupferorganischen Verbindungen eine hervorragende katalytische Aktivität, sehr gute Selekivität und hohe Ausbeuten. Zudem weisen solche Kupfer-Katalysatoren den Vorteil auf, bei nachlassender Katalysatoraktivität in flüssiger Form, d. h. als homogene Lösung, auf einfache Weise dem Reaktionsgemisch zudosiert werden zu können. Darüber hinaus kann das erfindungsgemäße Verfahren in einem kontinuierlich betriebenen Prozess besonders wirtschaftlich durchgeführt werden. Nach dem erfindungsgemäßen Verfahren hergestelltes Triethoxysilan weist in der Regel nur noch Chlorid-Gehalte ≤ 3 Gew.-ppm auf.

Die vorliegende Erfindung wird durch die folgenden Beispiele näher erläutert:

### Beispiel 1

### Diskontinuierliche Triethoxysilan-Synthese unter Normaldruck:

Es wurde die im Folgenden beschriebene Laborapparatur verwendet:
Beheizbarer 500-ml-Glasrührreaktor, ausgestattet mit Stickstoffüberlagerung, Temperaturmesseinrichtung, Alkohol und Katalysatordosiervorrichtung über Tauchrohr mittels Dosierpumpe, Destillationsvorrichtung, bestehend aus 20 cm Glaskolonne (Füllung: Keramiksattelkörper), Dimrothkühler und Destillationsvorlage.

Zur Durchführung der Reaktion wird der Reaktor unter Stickstoffüberlagerung mit 30 g aktiviertem Silicium, suspendiert in 250 g MARLOTHERM^{®} S, und gegebenenfalls festem Katalysator beschickt und auf ca. 200 bis 250 °C aufgeheizt. Anschließend wird in einem Zeitraum von 0,5 bis 4 Stunden zunächst Katalysator (ca. 1 g Cu-Carboxylat in 30 g Alkohol) über die Dosierpumpe zugeführt, danach der Alkohol (Dosierung: ca. 5 ml/min). Bei Nachlassen der Reaktion kann gegebenenfalls Katalysator (1 g Cu-Carboxylat in 30 g Alkohol) in ca. 1-Stunden-Abständen nachdosiert werden. Der entwickelte Wasserstoff wird als Maß für den Silicium-Umsatz volumetrisch über einen Laborgaszähler bestimmt. In regelmäßigen Abständen (ca. alle 15 Minuten) wird das den Reaktor verlassende und am Kühler kondensierte Produktgemisch gaschromatographisch analysiert. Die maximale Konzentration an Trialkoxysilan im Reaktorkondensat wird festgehalten. Sinkt die Trialkoxysilankonzentration im Reaktorkondensat unter 1 %, wird die Reaktion abgebrochen. Über die gravimetrisch protokollierte Gesamtmenge an Reaktorkondensat wird nach gaschromatographischer Bestimmung der Zusammensetzung die Trialkoxysilanausbeute bestimmt.

Die Dauer der Reaktion beträgt zwischen 4 und 6 Stunden. Die erzielbaren Umsätze liegen zwischen 82 bis 90 % Silicium, die Selektivitäten zu Trialkoxysilan erreichen 95 bis 97 %. Der Katalysatorbedarf ist mit durchschnittlich 3,5 % Cu bezüglich der Silicium-Einwaage gering.

Die Raum-Zeit-Ausbeuten in den diskontinuierlichen Versuchen betragen ca. 1 mol/l h Trialkoxysilan.

### Beispiel 2

### Diskontinuierliche Triethoxysilan-Synthese unter erhöhtem Druck:

Die im Beispiel 1 beschriebene Glasapparatur wird durch eine funktionell gleichwertige, druckfeste Apparatur ersetzt. Als Werkstoffe für den Reaktor kommen emaillierter Stahl, Kupfer oder Stahlreaktoren mit Kupferinnenmantel in Betracht.

Die Reaktionsführung entspricht der Betriebsweise unter Normaldruck. Hinter der Destillatvorlage ist eine Druckregelung installiert, die den gewünschten Systemdruck hält.

Die Raum-Zeit-Ausbeuten liegen im Bereich von ca. 1 mol/I h bei p_{abs} = 1 bar, ca. 1,5 mol/l h bei p_{abs} = 2 bar Trialkoxysilan, die Selektivitäten bleiben im Vergleich zur Fahrweise unter Normaldruck praktisch unverändert. Bei Betriebsdrücken von mehr als 5 bar abs. fällt die Selektivität zum Trialkoxysilan ab.

### Beispiel 3

### Aktivierung von Silicium:

Gemahlenes Silicium (dᵥₛₒ = 25 µm, d_{V90} = 80 µm), ca. 1 kg, wird in einem Rührreaktor in 2 l 1 Gew.-% HF suspendiert und ca. 30 Minuten bei einer Temperatur zwischen 20 und 30 °C behandelt. Der Reaktorinhalt wird anschließend in eine inertisierbare und beheizbare Filterzentrifuge oder einen Dekanter gefahren und mit ca. 2 bis 3 I Ethanol gewaschen. Die Alkohol-Restfeuchte kann durch Aufheizen der Filterzentrifuge oder des Dekanters auf Werte < 5 Gew.-% eingestellt werden. Das derart behandelte, alkoholfeuchte oder trockene Silicium-Pulver ist unmittelbar für die Reaktion einsatzfähig, behält aber die gewünschte Aktivität auch noch nach 10Tagen Lagerung unter inerten Bedingungen.

### Beispiel 4

### Herstellung des Katalysators:

Die Reaktion zur Herstellung des Katalysators wird in einem 1-I-Glas-Rotationsverdampfer durchgeführt. Die Apparatur kann über eine angeschlossene Wasserstrahlvakuumpumpe evakuiert werden. Zudem ist mit Stickstoff eine Inertisierung möglich.

80 g Cu(OH)₂, entsprechend 0,82 mol Cu, und 302 g Neononansäure (CAS Nr. 59354-78-8), entsprechend 1,9 mol, werden in den Kolben eingewogen. Bei Normaldruck wird die Temperatur für ca. 15 Minuten auf ca. 160 °C eingestellt. Das übergehende Reaktionswasser wird kondensiert.

Anschließend wird der Druck innerhalb von 10 Minuten auf das erzielbare Wasserstrahlvakuum abgesenkt, ca. 20 mbar. Die Temperatur wird weiterhin für ca. 1 Stunde auf 160 °C gehalten. Dabei destilliert überschüssige Neononansäure ab.

Danach wird die Temperatur auf ca. 180 °C gesteigert und für ca. 45 Minuten gehalten um Reste der Neononansäure aus dem Reaktionsgemisch zu entfernen.

Die Apparatur wird mit Stickstoff inertisiert und langsam abgekühlt auf ca. 70 bis 80 °C. Bei dieser Temperatur werden ca. 600 g Ethanol in den Kolben des Rotationsverdampfers gefahren und mit dem Reaktionsprodukt vermischt.

Anschließend wird die Apparatur weiter abgekühlt. Bei ca. 30 bis 40 °C wird das Produkt entnommen. Der so hergestellte Katalysator ist einsatzfähig.

Als Cu-Katalysator kann dem erfindungsgemäß beschriebenen Katalysator CuCl₂ zugegeben werden, im molaren Verhältnis Cu : Cl von 10 : 1 entspricht dies einer Zugabe von 0,041 mol CuCl₂ für obigen Reaktionsansatz.

### Beispiel 5

Diskontinuierliche Herstellung von Triethoxysilan mit HF aktiviertem, gelagerten Silicium:
Die Reaktion wird in einem 2-I-Glasreaktor mit Rührer, aufgesetzter Destillationskolonne, gefüllt mit Glas-Raschig-Ringen, und nachgeschaltetem Kühler und Destillatvorlage durchgeführt. Die Alkoholdosierung erfolgt über ein Tauchrohr durch eine Dosierpumpe. Die Katalysatorlösung wird entweder über eine zusätzliche Dosierpumpe und ein weiteres Tauchrohr oder manuell über eine Einspritzung vorgenommen. Das Destillat wird fraktioniert aufgefangen. Im Abgas der Destillatvorlage ist eine Gasuhr als Volumengaszähler installiert.

Unter Stickstoffatmosphäre werden 150 g alkoholfeuchtes Si-Pulver mit einer Restfeuchte von 8 bis 10 Gew.-% in ca. 1.300 g MARLOTHERM^{®} S suspendiert. Anschließend werden ca. 35 g des Katalysators einer 30gew.-%igen Lösung von Kupfer-Carboxylat, hier Kupfer-Neononanoat in Ethanol, und ca. 30 g Siliconöl als Schaumzerstörer in den kalten Reaktor gegeben.

Der Reaktor wird zeitprogrammiert auf ca. 240 bis 250 °C aufgeheizt. Während des Aufheizens destilliert der über das Silicium-Pulver eingebrachte Alkohol ab. Bei ca. 180 bis 200 °C tritt eine deutliche Gasentwicklung, H₂, auf. Der Gasvolumenstrom ist unmittelbar am volumetrischen Gaszähler feststellbar, welcher der Destillatvorlage nachgeschaltet ist. Über den Gasvolumenstrom kann der Reaktionsverlauf verfolgt werden.

Ab einer Reaktor-Temperatur von ca. 200 °C wird Ethanol dosiert. Durch die einsetzende exotherme Reaktion steigt die Temperatur schnell auf 250 °C. Die Ethanoldosierung beträgt zwischen 10 bis 20 g/Minute.

Aufgrund der Katalysatordesaktivierung ist es bei nachlassender Reaktion erforderlich, Katalysator in ca. 0,5-h-Zeitabständen nachzudosieren, ca. 5 ml der Kupfer-Neononanoat/Ethanol-Lösung.

Das Destillat wird fraktioniert aufgefangen und ausgewogen. Die Produktzusammensetzung wird mittels Gaschromatographie bestimmt.

Die Gesamtreaktionsdauer beträgt zwischen 4 und 6 Stunden. Die erzielbaren Umsätze liegen zwischen 82 bis 90 % des eingebrachten Siliciums, die Selektivitäten zu Triethoxysilan betragen 95 bis 97 %. Der Katalysatorbedarf ist mit 3,5 % Kupfer, bezogen auf die eingesetzte Siliciummenge, gering. Die Raum-Zeit-Ausbeute für Triethoxysilan beträgt im Mittel ca. 1,4 mol/h l.

Ferner sind die Versuchsergebnisse zu Beispiel 5 in Tabelle 1 aufgelistet und in Figur 2 graphisch dargestellt.

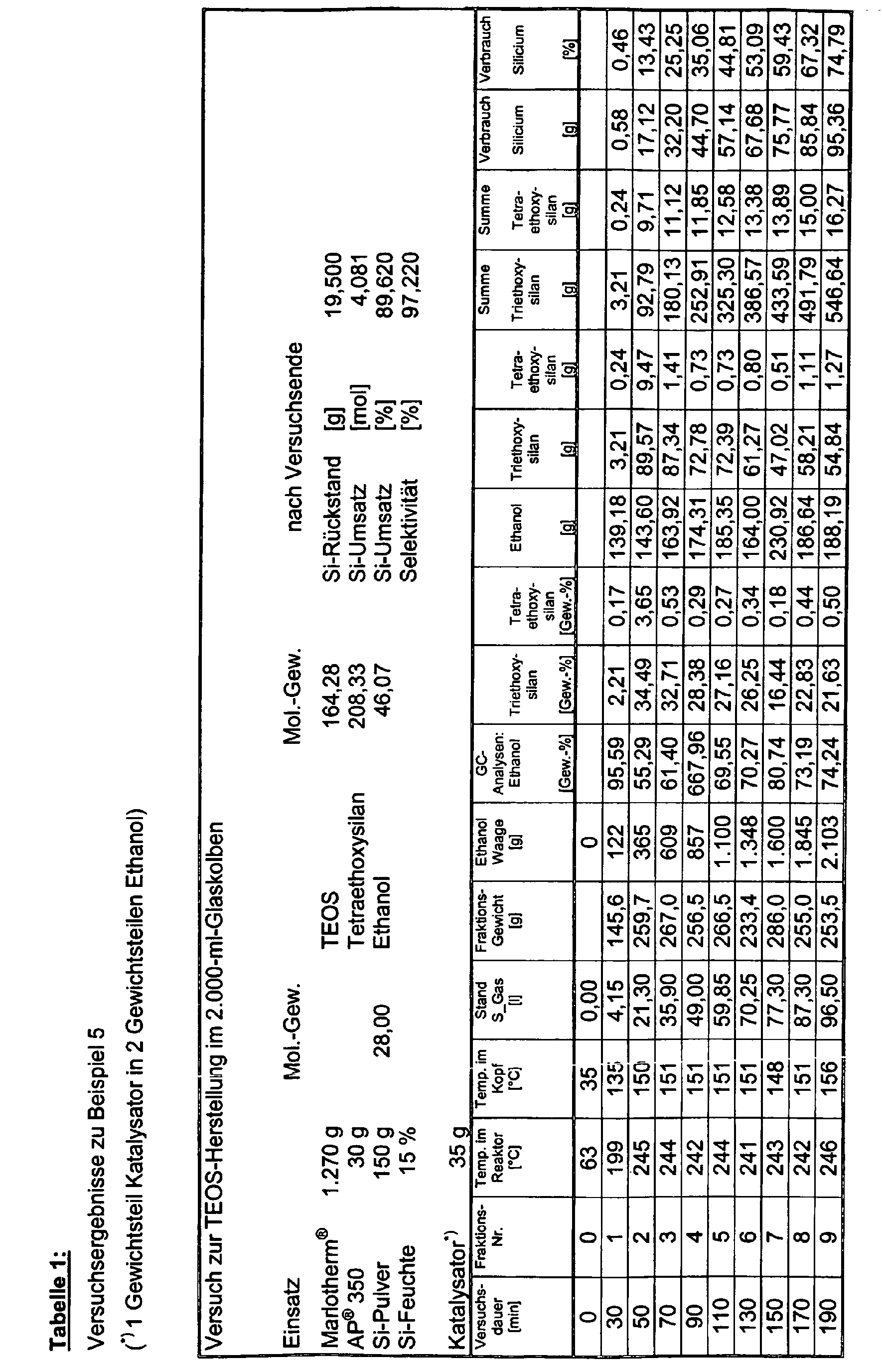

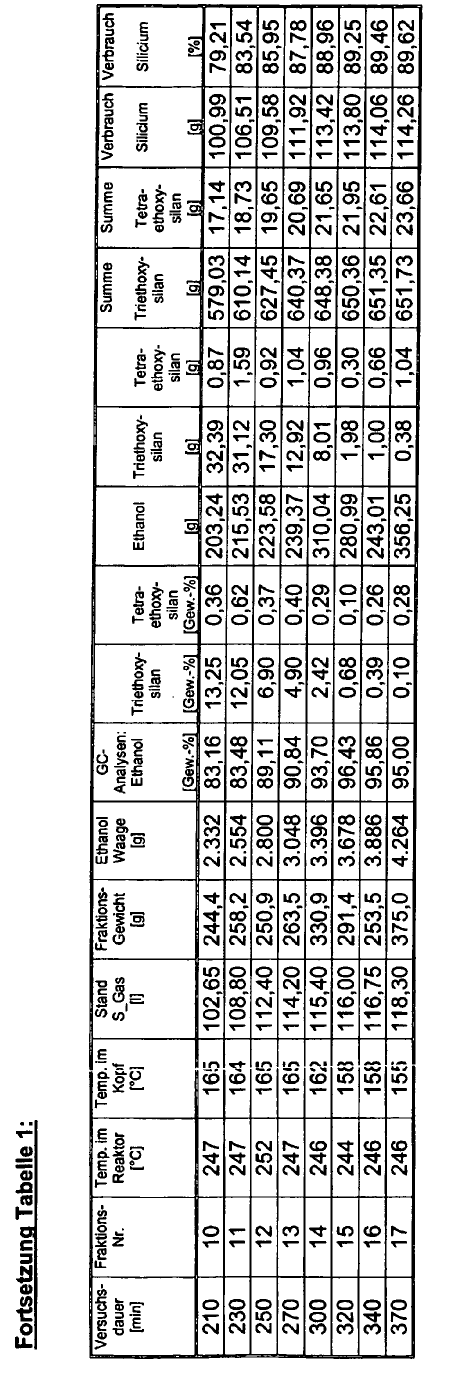

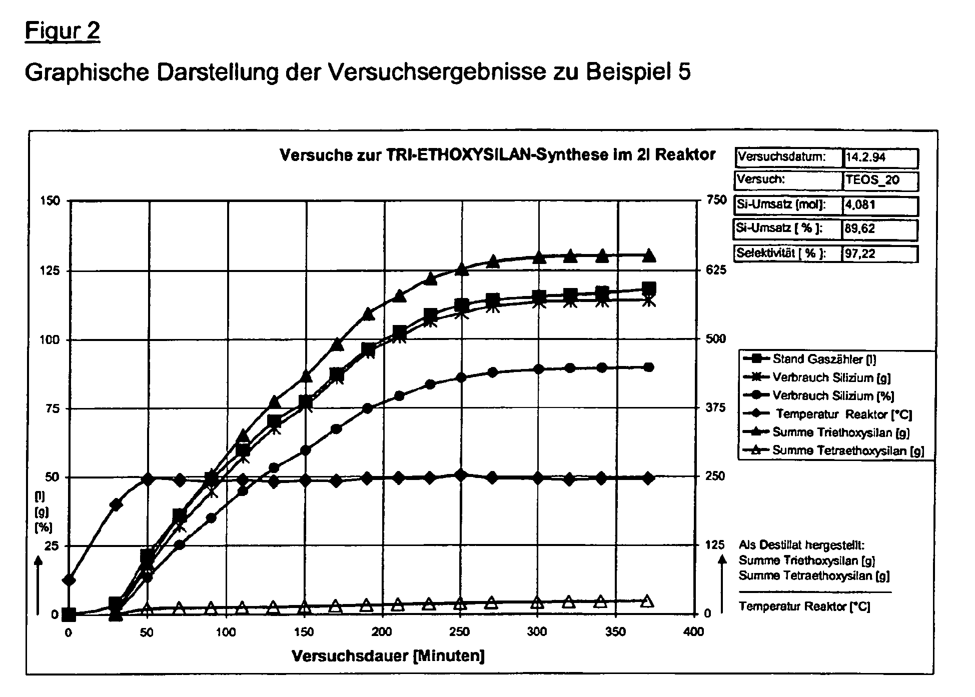

### Beispiel 6

### Kontinuierliche Triethoxysilan-Synthese (Herstellung von Triethoxysilan):

Die Versuchsanlage zur kontinuierlichen Herstellung von Trialkoxysilanen der allgemeinen Formel I beinhaltet im Wesentlichen die zuvor auf den Seiten 9 und folgende näher beschriebene Vorrichtung.

Die Aktivierung des Siliciums gemäß Beispiel 3 erfolgt in einer funktionell gleichwertigen Technikumsapparatur mit einem Reaktorvolumen von ca. 250 I. Dabei werden bei gleichen Verhältnissen der Einsatzstoffe ca. 50 kg Silicium, 90 kg 1 %ige Flusssäure und 71 kg Ethanol eingesetzt.

Die Herstellung des Katalysators gemäß Beispiel 4 erfolgt in einer funktionell gleichwertigen Technikumsapparatur mit einem Reaktorvolumen von ca. 35 I. Dabei werden bei gleichen Verhältnissen der Einsatzstoffe ca. 6,8 kg Neononansäure, 1,8 kg Cu(OH)₂ und 13,4 kg Ethanol eingesetzt.

Die Reaktion wird in einer 10-1-Stahlblasensäule mit Cu-Mantel und Cu-Einbauten durchgeführt. Die mit einem mehrstufigen Rührer ausgerüstete Blasensäule hat einen Innendurchmesser von ca. 0,2 m und ist mit einer aufgesetzten Kolonne und Partial-Rücklaufkondensator versehen. Die Brüden werden kondensiert und anschließend einer Rektifikation zugeleitet. Alkohol wird verdampft und über einen Gasverteiler am Boden der Blasensäule gefahren. Der Gasverteiler ist als Ringdüse mit nach unten gerichteten Bohrungen gestaltet.

Zum Anfahren der Reaktion werden als Startbatch aktiviertes Silicium (d_{V50} ca. 15 µm) und Lösungsmittel als ca. 20 % Suspension in den Reaktor gefahren. Katalysator, ca. 4 % Kupfer bezüglich der Siliciummenge, wird dazugegeben. Analog dem diskontinuierlichen Betrieb wird der Reaktor zeitprogrammiert auf ca. 200 °C aufgeheizt, sodann wurde mit der Dosierung von Alkohol, ca. 120 mol/h, begonnen. Dieser wird in einem Vorwärmer verdampft und über einen Gasverteiler am Boden der Blasensäule eingefahren. Die Temperatur wird bei Normaldruck bis auf 250 °C gesteigert. Der Reaktionsverlauf wird über die H₂-Entwicklung mittels eines "on-line-Wärmeleitfähigkeitsdetektors (WLD)" kontinuierlich im Abgasstrom verfolgt.

Bei ca. 200 °C setzt eine deutliche H₂-Entwicklung ein, die mit steigender Temperatur zunimmt und bei stationärer Reaktionstemperatur ein Plateau erreicht. Sobald die H₂-Entwicklung fällt, ist der Startbatch abgeschlossen und die kontinuierliche Zugabe von ca. 11 mol/h HF-aktiviertem Silicium kann erfolgen. Gleichzeitig werden ca. 200 g/h der 30gew.-%igen Cu-Carboxylatlösung als Katalysator dosiert.

Mit Hilfe dieses Verfahrens sind beispielsweise im direkten Durchgang, d. h. ohne Silicium-Rückführung aus der Ausschleusung, Silicium-Umsätze von ca. 65 % und Triaikoxysetektivität von ca. 98 % erzielbar. Die Raum-Zeit-Ausbeute beträgt ca. 0,85 bis 1 mol/h l Trialkoxysilan.

Unter stationären Betriebsbedingungen kann die Reaktion mit ca. 4 kg/h Ethanol und einem molaren Dosierverhältnis 6,5 mol Ethanol, bezüglich 1mol Silicium, gefahren werden. Der Silicium-Feststoffgehalt kann zwischen 15 und 30 % schwanken, bevorzugt sind 20 % Feststoffgehalt einzustellen. Die Katalysatordosierung beträgt 3 bis 4 g Kupfer, bezüglich je 100 g Silicium. Über das kondensierte Destillat werden ca. 7,5 mol/h Triethoxysilan erhalten.

## Patentansprüche

1. Vorrichtung zur kontinuierlichen Herstellung von halogenfreien Trialkoxysilanen der allgemeinen Formel I
(RO)₃SiH (I),
worin R eine Alkylgruppe mit 1 bis 6 Kohlenstoffatomen bedeutet,
auf der Basis einer Hauptreaktoreinheit (1), die einen Blasensäulenraktor (1.1) mit mehrstufiger Rührvorrichtung (1.1.1) beinhaltet, mindestens einer dem Hauptreaktor vorgeschalteten Dosiereinheit (2, 3, 4) für Flüssigkeiten und/oder Suspensionen und mindestens einer Dosiereinheit (5) für gasförmige und/oder dampfförmige Stoffe sowie einer dem Hauptreaktor nachgeschalteten Einheit (6) zur Produktaufarbeitung.

2. Verfahren zur Herstellung von halogenfreiem Triethoxysilan der Formel
(EtO)₃SiH
durch Umsetzung von Silicium mit Ethanol in einem inerten Lösemittel in Gegenwart eines kupferhaltigen Katalysators, wobei man als Katalysator mindestens eine kupferorganische Verbindung aus der Reihe Kupferalkylat oder Kupfercarboxylat, wobei der Carboxylrest 3 bis 9 Kohlenstoffatome enthält, einsetzt.

3. Verfahren nach Anspruch 2,
**dadurch gekennzeichnet,**
**dass** man als Katalysator Kupfer-Verbindungen verwendet, welche in einem inerten Lösemittel oder in dem verwendeten Alkohol löslich sind.

4. Verfahren nach Anspruch 2 oder 3,
**dadurch gekennzeichnet,**
**dass** als inertes Lösemittel ein auf Kohlenwasserstoffen basierendes Wärmeträgeröl eingesetzt wird.

5. Verfahren nach Anspruch 2 oder 3,
**dadurch gekennzeichnet,**
**dass** man als Katalysator ein Kupfercarboxylat verwendet, das aus Kupferhydroxid und einer Carbonsäure unter Entfernen des Reaktionswassers hergestellt wird.

6. Verfahren nach Anspruch 2 oder 3,
**dadurch gekennzeichnet,**
**dass** man als Katalysator ein Kupfercarboxylat verwendet, das aus metallischem Kupfer und einer Carbonsäure hergestellt wird.

7. Verfahren nach Anspruch 6,
**dadurch gekennzeichnet,**
**dass** als Kupfer-Quelle der Si- und Cu-haltige Abbrand aus der Herstellung der Triethoxysilan verwendet wird.

8. Verfahren nach den Ansprüchen 2 bis 4,
**dadurch gekennzeichnet,**
**dass** für die Umsetzung ein weitgehend von Oberflächensauerstoff und Siliciumoxid befreites, pulverförmiges Silicium eingesetzt wird.

9. Verfahren nach Anspruch 8,
**dadurch gekennzeichnet,**
**dass** das eingesetzte Silicium weniger als 0,1 Gew.-% Eisen enthält.

10. Verfahren nach Anspruch 8,
**dadurch gekennzeichnet,**
**dass** das für die Umsetzung verwendete Silicium durch eine Behandlung mit Fluorwasserstoff gewonnen wird.

11. Verfahren nach Anspruch 8,
**dadurch gekennzeichnet,**
**dass** das für die Umsetzung verwendete Silicium in einem wässrigen und/oder alkoholischen Medium mit einem pH-Wert > 10 vorbehandelt wird.

12. Verfahren nach den Ansprüchen 2 bis 11,
**dadurch gekennzeichnet,**
**dass** die Umsetzung von Silicium mit Ethanol in einem inerten Lösemittel in Gegenwart einer kupferorganischen Verbindung als Katalysator im Temperaturbereich zwischen 100 und 350 °C durchgeführt wird.

13. Verfahren nach den Ansprüchen 2 bis 12,
**dadurch gekennzeichnet,**
**dass** die Umsetzung von Silicium mit Ethanol in einem inerten Lösemittel in Gegenwart einer kupferorganischen Verbindung als Katalysator bei einem Druck von 1 bis 5 bar abs. durchgeführt wird.

14. Verfahren nach den Ansprüchen 2 bis 13,
**dadurch gekennzeichnet,**
**dass** die Umsetzung von Silicium mit Ethanol in einem inerten Lösemittel in Gegenwart einer kupferorganischen Verbindung als Katalysator und eines Entschäumers durchgeführt wird.

15. Verfahren nach den Ansprüchen 2 bis 14,
**dadurch gekennzeichnet,**
**dass** man die Umsetzung von Silicium mit Ethanol in einem inerten Lösemittel in Gegenwart einer kupferorganischen Verbindung als Katalysator kontinuierlich durchführt.

## Claims

1. Apparatus for continuously preparing halogen-free trialkoxysilanes of the general formula I
(RO)₃SiH (I)
in which R is an alkyl group having from 1 to 6 carbon atoms,
based on a main reactor unit (1) which comprises a bubble column reactor (1·1) with mutistage stirrer means (1·1·1), at least one metering unit (2, 3, 4) for liquids and/or suspensions, located upstream of the main reactor, and at least one metering unit (5) for gaseous and/or vaporous substances, and also a product workup unit (6) located downstream of the main reactor.

2. Process for preparing halogen-free triethoxysilane of the formula
(EtO)₃SiH
by reacting silicon with ethanol in an inert solvent in the presence of a copper catalyst, wherein at least one organocopper compound is used as catalyst from copper alkoxide or copper carboxylate in which the carboxylate radical contains from 3 to 9 carbon atoms.

3. Process according to Claim 2, **characterized in that** copper compound catalysts are used which are soluble in an inert solvent or in the alcohol used.

4. Process according to Claim 2 or 3, **characterized in that** a hydrocarbon-based heat transfer oil is used as inert solvent.

5. Process according to Claim 2 or 3, **characterized in that** a copper carboxylate prepared from copper hydroxide and a carboxylic acid with removal of the water of reaction is used as catalyst.

6. Process according to Claim 2 or 3, **characterized in that** a copper carboxylate prepared from metallic copper and a carboxylic acid is used as catalyst.

7. Process according to Claim 6, **characterized in that** the Si- and Cu-containing residue from the preparation of the triethoxysilane is used as copper source.

8. Process according to Claims 2 to 4, **characterized in that** a pulverulent silicon substantially free from surface oxygen and silica is used for the reaction.

9. Process according to Claim 8, **characterized in that** the silicon used contains less than 0.1% by weight iron.

10. Process according to Claim 8, **characterized in that** the silicon used for the reaction is obtained by treatment with hydrogen fluoride.

11. Process according to Claim 11, **characterized in that** the silicon used for the reaction is pretreated in an aqueous and/or alcoholic medium having a pH > 10.

12. Process according to Claims 2 to 11, **characterized in that** the reaction of silicon with ethanol in an inert solvent in the presence of an organocopper compound catalyst is conducted in the temperature range between 100 and 350°C.

13. Process according to Claims 2 to 12, **characterized in that** the reaction of silicon with ethanol in an inert solvent in the presence of an organocopper compound catalyst is conducted at a pressure of from 1 to 5 bar abs.

14. Process according to Claims 2 to 13, **characterized in that** the reaction of silicon with ethanol in an inert solvent is conducted in the presence of an organocopper compound catalyst and of a defoamer.

15. Process according to Claims 2 to 14, **characterized in that** the reaction of silicon with ethanol in an inert solvent in the presence of an organocopper compound catalyst is conducted continuously.

## Revendications

1. Dispositif pour la fabrication en continu de trialcoxysilanes exempts d'halogène, de formule générale I:
(RO)₃SiH (I),
dans laquelle, R représente un groupement alkyle ayant 1 à 6 atomes de carbone,
sur la base d'une unité de réacteur principal (1), qui contient un réacteur à colonnes à bulles (1.1) muni d'un dispositif d'agitation à plusieurs étages (1.1.1), d'au moins une unité de dosage (2,3,4) disposée avant le réacteur principal, destinée à des liquides et/ou à des suspensions, et d'au moins une unité de dosage (5) destinée à des substances sous forme de gaz et/ou de vapeur, ainsi que d'une unité disposée après le réacteur principal (6) pour le traitement des produits.

2. Procédé de fabrication de triéthoxysilane exempt d'halogène, de formule:
(EtO)₃SiH
consistant à faire réagir du silicium avec de l'éthanol dans un solvant inerte en présence d'un catalyseur contenant du cuivre, dans lequel on utilise, comme catalyseur, au moins un composé organique de cuivre de la série des alkylates ou des carboxylates de cuivre, le radical carboxyle contenant 3 à 9 atomes de carbone.

3. Procédé selon la revendication 2,
**caractérisé en ce que**
l'on utilise, comme catalyseur, des composés de cuivre qui sont solubles dans un solvant inerte ou dans l'alcool utilisé.

4. Procédé selon la revendication 2 ou 3,
**caractérisé en ce que**
l'on utilise, comme solvant inerte, une huile caloportrice à base d'hydrocarbures.

5. Procédé selon la revendication 2 ou 3,
**caractérisé en ce que**
l'on utilise, comme catalyseur, un carboxylate de cuivre que l'on fabrique à partir d'hydroxyde de cuivre et d'un acide carboxylique, tout en éliminant l'eau de la réaction.

6. Procédé selon la revendication 2 ou 3,
**caractérisé en ce que**
l'on utilise, comme catalyseur, un carboxylate de cuivre que l'on fabrique à partir de cuivre métallique et d'un acide carboxylique.

7. Procédé selon la revendication 6,
**caractérisé en ce que**
l'on utilise, comme source de cuivre, le résidu à teneur en Si et en Cu provenant de la fabrication du triéthoxysilane.

8. Procédé selon les revendications 2 à 4,
**caractérisé en ce que**
l'on utilise pour la réaction, un silicium pulvérulent largement exempt d'oxygène de surface et d'oxyde de silicium.

9. Procédé selon la revendication 8,
**caractérisé en ce que**
le silicium utilisé contient moins de 0,1 % en poids de fer.

10. Procédé selon la revendication 8,
**caractérisé en ce que**
le silicium utilisé pour la réaction est obtenu par un traitement avec du fluorure d'hydrogène.

11. Procédé selon la revendication 8,
**caractérisé en ce que**
le silicium utilisé pour la réaction fait l'objet d'un traitement préalable dans un milieu aqueux et/ou alcoolique dont la valeur de pH est supérieure à 10.

12. Procédé selon les revendications 2 à 11,
**caractérisé en ce que**
l'on effectue la réaction du silicium avec l'éthanol dans un solvant inerte, en présence d'un composé organique de cuivre comme catalyseur, dans une plage de températures comprise entre 100 et 350 °C.

13. Procédé selon les revendications 2 à 12,
**caractérisé en ce que**
l'on effectue la réaction du silicium avec l'éthanol dans un solvant inerte, en présence d'un composé organique de cuivre comme catalyseur, sous une pression absolue de 1 à 5 bars (abs).

14. Procédé selon les revendications 2 à 13,
**caractérisé en ce que**
l'on réalise la réaction du silicium avec l'éthanol dans un solvant inerte, en présence d'un composé organique de cuivre comme catalyseur et d'un agent antimoussant.

15. Procédé selon les revendications 2 à 14,
**caractérisé en ce que**
l'on effectue en continu la réaction du silicium avec l'éthanol dans un solvant inerte, en présence d'un composé organique de cuivre comme catalyseur.
